Europäisches Patentamt

European Patent Office

Office européen des brevets

(19)

(11) **EP 1 557 993 A2**

(12) **EUROPEAN PATENT APPLICATION**

(43) Date of publication:
**27.07.2005 Bulletin 2005/30**

(51) Int Cl.⁷: **H04L 27/20**

(21) Application number: **05000530.5**

(22) Date of filing: **12.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **22.01.2004 US 761626**

(71) Applicant: **Broadcom Corporation**
**Irvine, California 92618-7013 (US)**

(72) Inventors:
• **Pan, Meng-An**
**Cerritos, CA 90703 (US)**
• **Marholev, Bojko**
**Irvine, CA 92618 (US)**

(74) Representative: **Jehle, Volker Armin**
**Bosch, Graf v. Stosch, Jehle**
**Patentanwaltsgesellschaft mbH**
**Flüggenstrasse 13**
**80639 München (DE)**

(54) **System and method for simplifying analogue processing in a transmitter**

(57)    The system and method enable simpler analog processing by reducing the number of bits in a digital signal, by means of delta sigma modulation.

FIG. 2

EP 1 557 993 A2

**Description**

BACKGROUND

Technical Field:

This invention relates generally to wireless communication systems, and more particularly, but not exclusively, to simplifying analog processing in a wireless communication system.

Description of the Related Art:

Communication systems are known to support wireless and wire lined communications between wireless and/ or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth, advanced mobile phone services (AMPS), digital AMPS, global system for mobile communications (GSM), code division multiple access (CDMA), and/or variations thereof.

Depending on the type of wireless communication system, a wireless communication device, such as a cellular telephone, two-way radio, personal digital assistant (PDA), personal computer (PC), laptop computer, home entertainment equipment, et cetera communicates directly or indirectly with other wireless communication devices. For direct communications (also known as point-to-point communications), the participating wireless communication devices tune their receivers and transmitters to the same channel or channel pair (e.g., one of the plurality of radio frequency (RF) carriers of the wireless communication system) and communicate over that channel or channel pair. For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver receives RF signals, removes the RF carrier frequency from the RF signals directly or via one or more intermediate frequency stages, and demodulates the signals in accordance with a particular wireless communication standard to recapture the transmitted data. The transmitter converts data into RF signals by modulating the data to RF carrier in accordance with the particular wireless communication standard and directly or in one or more intermediate frequency stages to produce the RF signals.

When converting digital data to analog for transmission as RF signals, it is beneficial to reduce the number of bits in the digital data in order to simplify a Digital to Analog Converter (DAC) and lessen power requirements. However, decreasing the number of bits in the digital data may also decrease the signal to noise ratio, thereby decreasing the clarity of the data carried in the RF signals.

Accordingly, a new system and method are needed that use less hardware and power than conventional transmitters without substantially reducing clarity of the data carried in the RF signals.

SUMMARY

Embodiments of the invention form a system and method that enable simpler analog processing through the use of delta sigma modulation. Accordingly, less hardware and power are required, thereby reducing cost and size of a transmitter.

In an embodiment of the invention, the method comprises: performing delta sigma modulation on a digital quadrature signal; converting the modulated signal to an analog signal; converting the analog signal to an RF signal; and transmitting the RF signal.

In another embodiment of the invention, the transmitter comprises a delta sigma modulator, a digital to analog converter, a mixer, and an antenna. The delta sigma modulator performs delta sigma modulation on a digital quadrature signal. The digital to analog converter is communicatively coupled to the delta sigma modulator and converts the modulated signal into an analog signal. The mixer is communicatively coupled to the digital to analog converter and converts the analog signal into a radio frequency signal. The antenna is communicatively coupled to the mixer and transmits the radio frequency signal to other wireless devices.

According to another aspect of the invention, a method, comprises

performing delta sigma modulation on a digital quadrature signal;
converting the modulated signal to an analog signal;
converting the analog signal to an RF signal; and
transmitting the RF signal.

Advantageously, the modulation reduces the number of bits of the digital quadrature signal.

Advantageously, the reduction is from 10 bits to 4 bits.

Advantageously, the method further comprises amplifying the RF signal before the transmitting.

Advantageously, the delta sigma modulation includes $2^{nd}$ order delta sigma modulation.

Advantageously, the method further comprises coding the modulated signal with a thermometer code.

Advantageously, the digital quadrature signal is formed using one of GFSK, 4-PSK, and 8-PSK modulations.

Advantageously, the method further comprises performing interpolation filtering on the digital quadrature signal before the delta sigma modulation.

Advantageously, the interpolation filtering reduces the digital quadrature signal from 12 bits to 10 bits.

According to another aspect of the invention, a system comprises:

means for performing delta sigma modulation on a digital quadrature signal;
means for converting the modulated signal to an analog signal;
means for converting the analog signal to an RF signal; and
means for transmitting the RF signal.

According to another aspect of the invention, an RF transmitter comprises:

a delta sigma modulator capable of performing delta sigma modulation on a digital quadrature signal;
a DAC, communicatively coupled to the delta sigma modulator, capable of converting the modulated signal to an analog signal;
a mixer, communicatively coupled to the DAC, capable of converting the analog signal to an RF signal; and
an antenna, communicatively coupled to the mixer, capable of transmitting the RF signal.

Advantageously, the modulation reduces the number of bits of the digital quadrature signal.

Advantageously, the reduction is from 10 bits to 4 bits.

Advantageously, the transmitter further comprises a power amplifier, communicatively coupled to the antenna and the mixer, capable of amplifying the RF signal before the antenna transmits the RF signal.

Advantageously, the delta sigma modulator includes a $2^{nd}$ order delta sigma modulator.

Advantageously, the transmitter further comprises delta sigma modulator is further capable of coding the modulated signal with a thermometer code.

Advantageously, the digital quadrature signal is formed using one of GFSK, 4-PSK, and 8-PSK modulations.

Advantageously, the transmitter further comprises an interpolation filter, communicatively coupled to the delta sigma modulator, capable of performing interpolation filtering on the digital quadrature signal before the delta sigma modulation.

Advantageously, the interpolation filtering reduces the digital quadrature signal from 12 bits to 10 bits.

BRIEF DESCRIPTION OF THE DRAWINGS

Non-limiting and non-exhaustive embodiments of the present invention are described with reference to the following figures, wherein like reference numerals refer to like parts throughout the various views unless otherwise specified.

FIG. 1 is a block diagram illustrating a network system according to an embodiment of the present invention;

FIG. 2 is a block diagram illustrating a transmitter section according to an embodiment of the present invention;

FIG. 3A and FIG. 3B are diagrams illustrating delta sigma modulation effect on quantization noise;

FIG. 4 is a block diagram illustrating a Digital to Analog Converter;

FIG. 5 is a flowchart illustrating a method of simplifying analog processing in a wireless transmitter.

DETAILED DESCRIPTION OF THE ILLUSTRATED EMBODIMENTS

The following description is provided to enable any person having ordinary skill in the art to make and use the invention, and is provided in the context of a particular application and its requirements. Various modifications to the embodiments will be readily apparent to those skilled in the art, and the generic principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

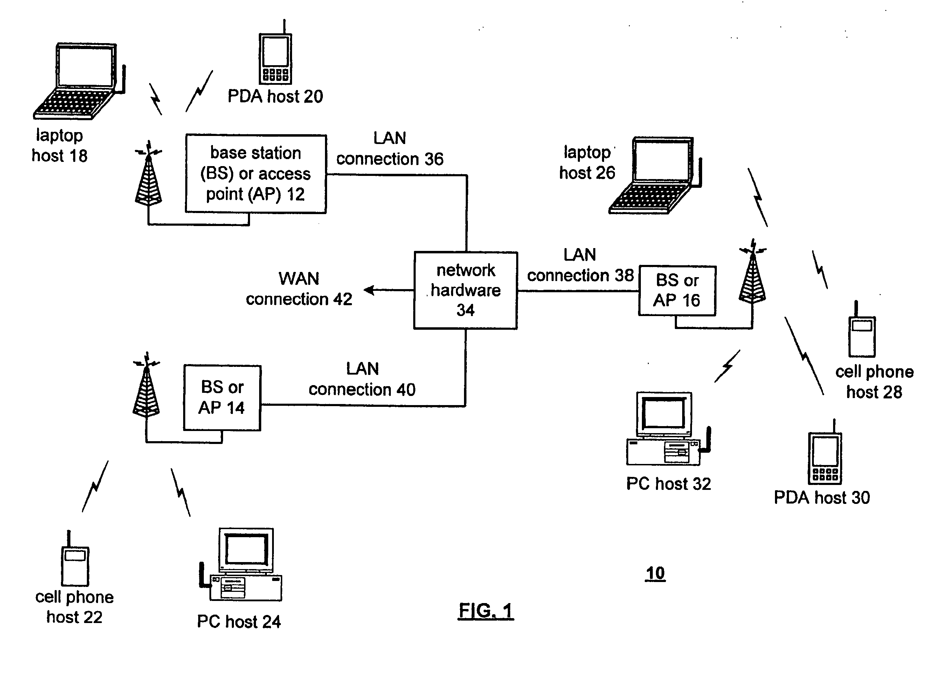

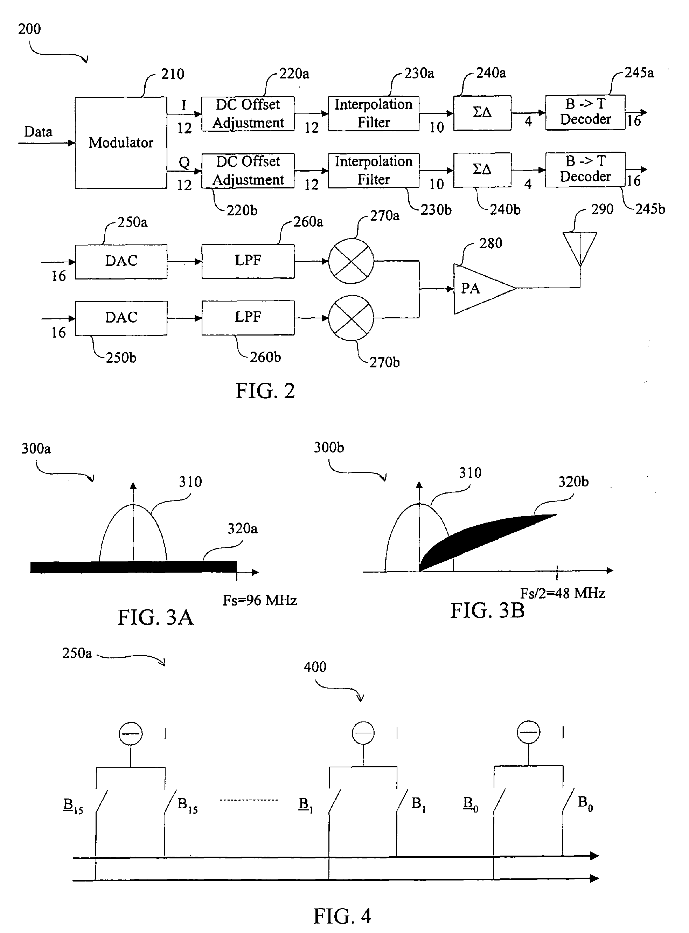

FIG. 1 is a block diagram illustrating a network system 10 according to an embodiment of the present invention. The system 10 includes a plurality of base stations and/or access points 12-16, a plurality of wireless communication devices 18-32 and a network hardware component 34. The wireless communication devices 18-32 may be laptop host computers 18 and 26, personal digital assistant hosts 20 and 30, personal computer hosts 24 and 32 and/or cellular telephone hosts 22 and 28. The details of the wireless communication devices will be described in greater detail with reference to FIG. 2.

The base stations or access points 12 are operably coupled to the network hardware 34 via local area network connections 36, 38 and 40. The network hardware 34, which may be a router, switch, bridge, modem, system controller, etc. provides a wide area network connection 42 for the communication system 10. Each of the base stations or access points 12-16 has an associated antenna or antenna array to communicate with the wireless communication devices in its area. Typically, the wireless communication devices register with a particular base station or access point 12-14 to receive services from the communication system 10. For direct connections (i.e., point-to-point communications), wireless communication devices communicate directly via an allocated channel.

Typically, base stations are used for cellular telephone systems and like-type systems, while access points are used for in-home or in-building wireless networks. Regardless of the particular type of communication system, each wireless communication device includes a built-in radio and/or is coupled to a radio. The radio includes a transmitter capable of simplified analog processing and therefore has characteristics of reduced power requirements, reduced costs, and reduced size.

FIG. 2 is a block diagram illustrating a transmitter section 200 according to an embodiment of the present invention. Each wireless device of the network system 10 can include a transmitter portion 200 for transmitting data to other wireless network nodes. The transmitter section 200 includes a modulator 210 communicatively coupled to DC Offset Adjustment Engines 220a and 220b, which are communicatively coupled to Interpolation Filters 230a and 230b respectively. The Interpolation Filters 230a and 230b and communicatively coupled to delta sigma modulators 240a and 240b respectively (also referred to as sigma delta modulators). The delta sigma modulators 240a and 240b are communicatively coupled to binary to thermometer decoders 245a and 245b respectively. The decoders 245a and 245b are communicatively coupled to the DACs 250a and 250b respectively, which are communicatively coupled to low pass filters (LPFs) 260a and 260b. The LPFs 260a and 260b are communicatively coupled to mixers 270a and 270b respectively, which are each communicatively coupled to a power amplifier 280, which is communicatively coupled to an antenna 290.

The modulator 210 receives digital data from a processing component of a wireless device and performs quadrature amplitude modulation on the data. The modulation can include, for example, Gaussian Frequency Shift Keying (GFSK), 4-Phase Shift Keying (PSK), and/or 8-PSK. The modulator 210 provides quadrature outputs. In an embodiment of the invention, the sampling frequency is 12MHz and output is 12 bits.

For FSK modulation, the I output can be represented as

$$I = \cos(2\pi fct + 2\pi f_d \int v\, dt)$$

and the Q output can be represented as

$$I = \sin(2\pi fct + 2\pi f_d \int v\, dt).$$

For PSK modulation, the I output can be represented as

$$I = \mathrm{Re}\left(R(t)e^{j2\Pi F_i ft}\right)$$

and the Q output can be represented as

$$Q = IM\left(R(t)e^{j2\Pi F_i ft}\right).$$

The DC offset adjustment engines 220a and 220b adjust the DC offset at the digital domain of the I and Q outputs from the modulator 210. The DC adjustment word length is 11 bits.

The interpolation filters 230a and 230b up sample the output from 12 MHz to 96 MHz. Higher OSR will make the following delta sigma modulation easier. For IF frequency $\leq$ 1 MHz, the interpolation filters 230a and 230b filter out the 12 MHz image by more than 80 dBc. For IF of 2 MHz, the interpolation filters 230a and 230b filter out the 12 MHz by more than 60 dBc. Output of the interpolation filters 230a and 230b are 10 bits.

The delta sigma modulators 240a and 240b are second order delta sigma modulators that output 4 bits from a 10 bit input. The delta sigma modulators 240a and 240b also push quantization noise outside the LPF 260a and 260b bandwidth as will be discussed in further detail in conjunction with FIG. 3A and FIG. 3B below. The sampling frequency of the delta sigma modulators 240a and 240b are each 96 MHz. Input ranges from -2 to 1.75. Depending on control bit settings, incoming input can range from -1 to +1 or from -1.25 to +1.25. The extra range is reserved for signal excursions when modulation is present. With an input range of -1.25 to +1.25 and no modulation, output amplitude will be 5. The binary to thermometer decoders 245a and 245b convert the 4 bit output from delta sigma modulators 240a and 240b to thermometer coding (16 bits) according to Table I. In an embodiment of the invention, the DACs 250a and 250b incorporate the decoders 245a and 245b therein.

Table I

| ΔΣ Output | Binary Number | Mag | b15 | b14 | b13 | b12 | b11 | b10 | b9 | b8 | b7 | b6 | b5 | b4 | b3 | 2 | b1 | b0 |
|---|---|---|---|---|---|---|---|---|---|---|---|---|---|---|---|---|---|---|
| 7 | 0111 | 15 | 0 | 1 | 1 | 1 | 1 | 1 | 1 | 1 | 1 | 1 | 1 | 1 | 1 | 1 | 1 | 1 |
| 6 | 0110 | 14 | 0 | 0 | 1 | 1 | 1 | 1 | 1 | 1 | 1 | 1 | 1 | 1 | 1 | 1 | 1 | 1 |
| 5 | 0101 | 13 | 0 | 0 | 0 | 1 | 1 | 1 | 1 | 1 | 1 | 1 | 1 | 1 | 1 | 1 | 1 | 1 |
| 4 | 0100 | 12 | 0 | 0 | 0 | 0 | 1 | 1 | 1 | 1 | 1 | 1 | 1 | 1 | 1 | 1 | 1 | 1 |
| 3 | 0011 | 11 | 0 | 0 | 0 | 0 | 0 | 1 | 1 | 1 | 1 | 1 | 1 | 1 | 1 | 1 | 1 | 1 |
| 2 | 0010 | 10 | 0 | 0 | 0 | 0 | 0 | 0 | 1 | 1 | 1 | 1 | 1 | 1 | 1 | 1 | 1 | 1 |
| 1 | 0001 | 9 | 0 | 0 | 0 | 0 | 0 | 0 | 0 | 1 | 1 | 1 | 1 | 1 | 1 | 1 | 1 | 1 |
| 0 | 0000 | 8 | 0 | 0 | 0 | 0 | 0 | 0 | 0 | 0 | 1 | 1 | 1 | 1 | 1 | 1 | 1 | 1 |
| -1 | 1111 | 7 | 0 | 0 | 0 | 0 | 0 | 0 | 0 | 0 | 0 | 1 | 1 | 1 | 1 | 1 | 1 | 1 |
| -2 | 1110 | 6 | 0 | 0 | 0 | 0 | 0 | 0 | 0 | 0 | 0 | 0 | 1 | 1 | 1 | 1 | 1 | 1 |
| -3 | 1101 | 5 | 0 | 0 | 0 | 0 | 0 | 0 | 0 | 0 | 0 | 0 | 0 | 1 | 1 | 1 | 1 | 1 |
| -4 | 1100 | 4 | 0 | 0 | 0 | 0 | 0 | 0 | 0 | 0 | 0 | 0 | 0 | 0 | 1 | 1 | 1 | 1 |
| -5 | 1011 | 3 | 0 | 0 | 0 | 0 | 0 | 0 | 0 | 0 | 0 | 0 | 0 | 0 | 0 | 1 | 1 | 1 |
| -6 | 1010 | 2 | 0 | 0 | 0 | 0 | 0 | 0 | 0 | 0 | 0 | 0 | 0 | 0 | 0 | 0 | 1 | 1 |
| -7 | 1001 | 1 | 0 | 0 | 0 | 0 | 0 | 0 | 0 | 0 | 0 | 0 | 0 | 0 | 0 | 0 | 0 | 1 |
| -8 | 1000 | 0 | 0 | 0 | 0 | 0 | 0 | 0 | 0 | 0 | 0 | 0 | 0 | 0 | 0 | 0 | 0 | 0 |

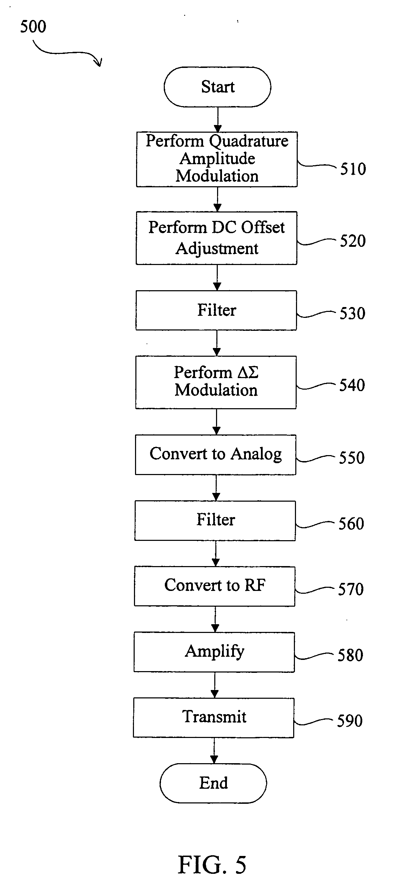

The DACs 250a and 250b, as will be discussed in further detail in conjunction with FIG. 5 below, use thermometer coding to minimize sampling clock (96 MHz) glitches. The DACs 250a and 250b convert the digital signals to analog signals. The LPFs 260a and 260b receive the analog signals and filter out any glitches to generate a continuous signal. The mixers 270a and 270b convert the analog signals to an RF signal (e.g., 2.4 GHz for Bluetooth), which is then amplified by the power amplifier 280 and transmitted by the antenna 290.

FIG. 3A and FIG. 3B are diagrams illustrating delta sigma modulation effect on quantization noise. The delta sigma modulation performed by the delta sigma modulator minimizes the quantization noise 320a by pushing a substantial portion of the noise 320a outside of the signal 310. As shown in FIG. 3B, the reshaped quantization noise 320b is substantially outside of the signal 310 and outside of the LPFs 260a and 260b bandwidth.

FIG. 4 is a block diagram illustrating the DAC 250a. The DAC 250b can be hardware equivalent to the DAC 250a. The DAC 250a includes 16 unit current sources, such as current source 400. In another embodiment of the invention, a different number of current sources may be used based on the delta sigma output. The DAC 250a uses thermometer coded input from the decoders 245a and 245b. $I_{unit}$ is 16µA. $I_{dc}$ is equal to 16 * 8 = 128 µA. $I_{amp}$ is equal to 5 * 16 =80µA. In an embodiment of the invention, the DAC 250a can have a W/L of 32µm / 0.5µm to ensure that current cells have enough matching and to provide the output with room to swing.

Table II below shows output Iout of the DAC 250a based on the delta sigma output and corresponding thermometer coding.

Table II

| $\Delta\Sigma$ Out | Equivalent Value | Thermometer Out | Ip | In | Iout=Ip-In |
|---|---|---|---|---|---|
| 0111 | 1.75 | 15 | 15*I | 1*I | 14*I |
| . | | | . | . | . |
| 0001 | 0+0.25 | 9 | 9*I | 7*I | 2*I |
| 0000 | 0 | 8 | 8*I | 8*I | 0*I |
| 1111 | -0.25 | 7 | 7*I | 9*I | -2*I |
| . | . | | . | . | . |
| 1000 | -2 | 0 | 0*I | 16*I | -16*I |

FIG. 5 is a flowchart illustrating a method 500 of simplifying analog processing in a wireless transmitter. In an embodiment of the invention, the transmitter section 200 can perform the method 500. First, quadrature amplitude modulation is performed (510) on received digital data to generate I and Q signals. DC offset adjustment is then performed (520) on the I and Q signals. Interpolation filtering on the I and Q signals is then performed (530) to generate a 10 bit output.

After the interpolation filtering (530), delta sigma modulation is performed (540) to reduce the 10 bit output to 4 bits. The performance (540) of delta sigma modulation pushes quantization noise out of the bandwidth of the LPFs 260a and 260b. The delta sigma modulation (540) can include coding the modulated data with a thermometer code. After performing (540) the delta sigma modulation, the 4 bit signals are converted (570) to radiofrequency (RF) signals, amplified (580) and transmitted (590). The method 500 then ends.

Accordingly, embodiments of the invention enable simpler analog processing by reducing the number of bits of digital data without substantially decreasing the signal to noise ratio. Therefore, less hardware and less power are required to perform the analog processing.

The foregoing description of the illustrated embodiments of the present invention is by way of example only, and other variations and modifications of the above-described embodiments and methods are possible in light of the foregoing teaching. Components of this invention may be implemented using a programmed general purpose digital computer, using application specific integrated circuits, or using a network of interconnected conventional components and circuits.

Connections may be wired, wireless, modem, etc. The embodiments described herein are not intended to be exhaustive or limiting. The present invention is limited only by the following claims.

**Claims**

**1.** A method, comprising:

performing delta sigma modulation on a digital quadrature signal;
converting the modulated signal to an analog signal;
converting the analog signal to an RF signal; and
transmitting the RF signal.

2. The method of claim 1, wherein the modulation reduces the number of bits of the digital quadrature signal.

3. The method of claim 2, wherein the reduction is from 10 bits to 4 bits.

4. The method of claim 1, further comprising amplifying the RF signal before the transmitting.

5. The method of claim 1, wherein the delta sigma modulation includes $2^{nd}$ order delta sigma modulation.

6. The method of claim 1, further comprising coding the modulated signal with a thermometer code.

7. The method of claim 1, wherein the digital quadrature signal is formed using one of GFSK, 4-PSK, and 8-PSK modulations.

8. The method of claim 1, further comprising performing interpolation filtering on the digital quadrature signal before the delta sigma modulation.

9. A system, comprising:

   means for performing delta sigma modulation on a digital quadrature signal;
   means for converting the modulated signal to an analog signal;
   means for converting the analog signal to an RF signal; and
   means for transmitting the RF signal.

10. An RF transmitter, comprising:

    a delta sigma modulator capable of performing delta sigma modulation on a digital quadrature signal;
    a DAC, communicatively coupled to the delta sigma modulator, capable of converting the modulated signal to an analog signal;
    a mixer, communicatively coupled to the DAC, capable of converting the analog signal to an RF signal; and
    an antenna, communicatively coupled to the mixer, capable of transmitting the RF signal.

laptop host 18

PDA host 20

base station (BS) or access point (AP) 12

LAN connection 36

laptop host 26

WAN connection 42

network hardware 34

LAN connection 38

BS or AP 16

LAN connection 40

BS or AP 14

cell phone host 28

PC host 32

PDA host 30

cell phone host 22

PC host 24

10

FIG. 1

EP 1 557 993 A2

FIG. 2

FIG. 3A

FIG. 3B

Fs=96 MHz

Fs/2=48 MHz

FIG. 4

500

```
         ┌─────────┐
         │  Start  │
         └────┬────┘
              │
   ┌──────────▼──────────┐
   │ Perform Quadrature  │
   │     Amplitude       │──── 510
   │     Modulation      │
   └──────────┬──────────┘
              │
   ┌──────────▼──────────┐
   │  Perform DC Offset  │──── 520
   │     Adjustment      │
   └──────────┬──────────┘
              │
   ┌──────────▼──────────┐
   │       Filter        │──── 530
   └──────────┬──────────┘
              │
   ┌──────────▼──────────┐
   │     Perform ΔΣ      │──── 540
   │     Modulation      │
   └──────────┬──────────┘
              │
   ┌──────────▼──────────┐
   │  Convert to Analog  │──── 550
   └──────────┬──────────┘
              │
   ┌──────────▼──────────┐
   │       Filter        │──── 560
   └──────────┬──────────┘
              │
   ┌──────────▼──────────┐
   │    Convert to RF    │──── 570
   └──────────┬──────────┘
              │
   ┌──────────▼──────────┐
   │       Amplify       │──── 580
   └──────────┬──────────┘
              │
   ┌──────────▼──────────┐
   │      Transmit       │──── 590
   └──────────┬──────────┘
              │
         ┌────▼────┐
         │   End   │
         └─────────┘
```

FIG. 5